# EUROPEAN PATENT SPECIFICATION

(11) **EP 0 904 657 B1**
(45) Date of publication and mention of the grant of the patent: **24.07.2002**
(21) Application number: 98901463.4
(22) Date of filing: 16.02.1998
(51) Int. Cl.: H04N 5/64, H01J 29/07

(54) **MONITOR HAS TUBULAR LOUDSPEAKER REDUCING CRT'S MASK VIBRATIONS**
MONITOR MIT RÖHRENFÖRMIGEN LAUTSPRECHERN ZUR REDUZIERUNG DER VIBRATIONEN DER KATHODENSTRAHLRÖHRENMASKE
MONITEUR DOTE DE HAUT-PARLEUR TUBULAIRE REDUISANT LES VIBRATIONS DE MASQUAGE D'UN TUBE CATHODIQUE

(30) Priority: 12.03.1997 US 815252
(43) Date of publication of application: 31.03.1999
(73) Proprietor: Koninklijke Philips Electronics N.V., 5621 BA Eindhoven (NL)
(72) Inventor: D'HOOGH, Guido, NL-5656 AA Eindhoven (NL); VERHEYEN, Achiel, E., NL-5656 AA Eindhoven (NL)
(74) Representative: Schrijnemaekers, Hubert Joannes Maria
(86) International application number: IB9800199
(87) International publication number: WO9841014

(56) References cited:
- EP-A- 0 304 629
- WO-A-96/31083
- DE-A- 4 030 089

## Description

The invention relates to an apparatus with a combination of a monitor and a loudspeaker system.

Examples of the mentioned combination are television sets and computer monitors. Typically, the monitor comprises a cathode-ray-tube (CRT). A problem that may occur if loudspeakers are integrated with such a monitor relates to the acoustic coupling between the loudspeaker and the monitor's shadow mask. To explain this in a more detail, the configuration of a CRT and the working of a bass-loudspeaker are discussed below.

A CRT includes an electron gun, deflection coils and a screen. The inside of the screen is coated with light-sensitive phosphors. In color CRTs, the phosphors comprise red, blue and green crystals arranged in triads of each one of the colored phosphors. The electron gun generates three beams, one for each color, which directed by the deflection coils scan the screen moving from left to right and up and down. The phosphors light up in the relevant color when illuminated by the beams. In order to produce a correctly colored image, each electron beam must hit only the appropriate colored phosphor. To ensure such accuracy, the shadow mask is used as a filter. The shadow mask is a metal plate of the same shape as the screen and with the same number of holes as the number of triads on the screen. Each hole has a corresponding triad of phosphors which prevents adjacent triads from being influenced.

A loudspeaker is an electro-acoustic transducer, i.e., a device for converting electrical energy into acoustic energy by moving a diaphragm under control of an electric signal. The moving diaphragm displaces a volume of air, the resulting pressure variations being perceived as sound. As known in the art, loudspeakers are mounted in an enclosure or speaker cabinet.

The CRT's mask turns out to be susceptible to frequencies in the audio spectrum, i.e., it will resonate at particular frequencies. This mechanical vibration adversely affects the quality of the picture being displayed due to the resulting misalignment between the mask's holes and the corresponding triads on the screen. Sound waves may be incident on the CRT through the air or via mechanical contact, directly or indirectly, between the CRT and the loudspeaker. The problem is mostly noticeable in the low and middle frequency ranges.

Although the problem is mostly noticeable in CRTs, other types of monitors may also be affected by undesired vibrations of their components caused by acoustic interaction with a nearby loudspeaker system.

Several solutions are known to the well known problem of vibrating masks. For example, US-A 4,318,025 suggests to suspend the mask from the screen through an absorbing material. US-A 5,103,132 and US-A 5,315,208 propose using a specific supporting frame to reduce the mask's sensitivity to vibrations.

It is an object of the invention to provide an alternative solution to the problem described above.

To this end, the invention provides the apparatus as defined in Claim 1. The tubular housing or enclosure of the transducer includes a hollow elongated cylinder. The cylinder is mechanically very rigid in the radial direction. Radial oscillations will therefore hardly occur. Especially if the tubular housing has a substantially circular cross-section, its resistance to radial oscillations is maximum. Accordingly, the problem is tackled at the origin: if there is less vibration in the tube's material, there is less to transfer to its environment through mechanical or acoustic coupling. In order to have the combination fit in the monitor for an apparatus such as a television set or a computer user-interface, the tubular housing may be slightly deformed (e.g., its axis can be bent, its cross-section can be made to deviate slightly from the circular form) without degrading audio performance and without substantially decreasing resistance to radial oscillations, thus optimally using the space available inside the monitor or inside the apparatus. As defined, the tubular housing is mounted so that its axis is substantially in parallel with a plane of a front panel of the monitor. The CRT's shadow mask is sensitive to vibrations perpendicular to its plane. By mounting the tubular housing so that its axis is substantially in parallel with the mask, the mechanical coupling between the loudspeaker and the CRT is minimized. The reason for this is that the forces that arise during operation of the loudspeaker device point along this axis. The tubular housing can, but need not, be elastically attached to an interior or exterior of the monitor. Experiments have shown that the acoustic coupling of loudspeaker to the mask is negligible if the tubular housing is mounted in aforesaid proper orientation with respect to the mask, even when no elastic or shock absorbing means is used to attach the tube to the monitor's interior.

Preferably, the other end of the tubular housing is provided with a passive radiator. This enhances audio performance, but also admits smaller sized combinations than are possible with a closed housing or a vented enclosure while maintaining performance.

At least the transducer is of the telescopic kind, that enables large displacements of air combined with small size. In a telescoping transducer, the cone is suspended from a sub-frame, and the sub-frame is suspended from the chassis, directly or through one or more other sub-frames. The cone of the transducer is moveable with regard to a respective sub-frame and the sub-frame is moveable with regard to the chassis. Thus, a large displacement volume is combined with a small diameter of the cone, owing to the accumulation of the individual amplitudes of one or more sub-frames and of the cone. The same applies for a telescoping radiator. A telescopic transducer and a passive radiator are described in the not prepublished patent applications WO-A 97/46046 and WO-A 97/46047, respectively. Such a loudspeaker with telescoping transducer and passive radiator for use in a monitor has a volume of e.g. 1 liter.

It is to be noted that WO-A 96/31083 discloses a loudspeaker system for e.g. mounting a television set, which system includes an elongated enclosure and has a speaker mounted at each end of the enclosure.

The invention is explained by way of example and with reference to the accompanying drawings, wherein:
Fig. 1 is a diagram of an apparatus according to the invention;
Figs. 2 and 3 are diagrams of telescoping transducer;
Fig. 4 is a diagram of a loudspeaker system with a transducer and a passive radiator; and
Fig. 5 is a diagram of a passive radiator.

### Apparatus

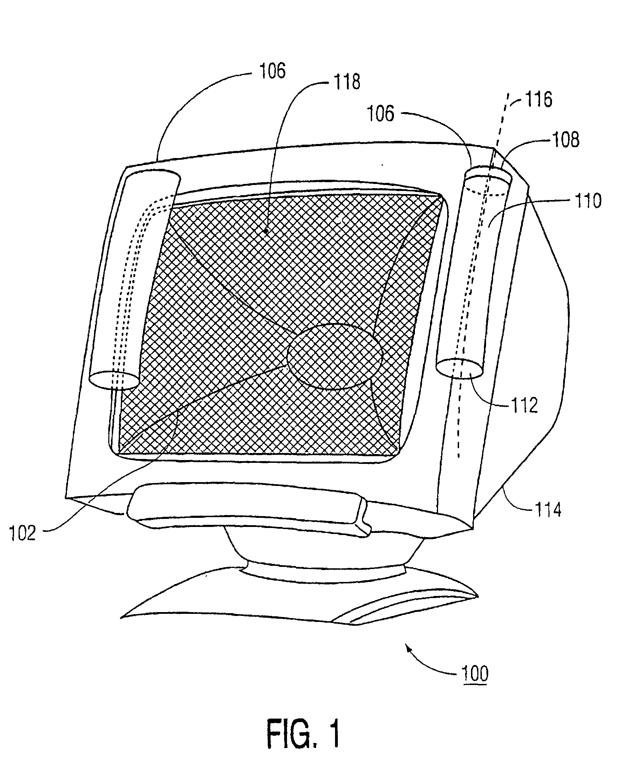

Fig.1 is a diagram in ghost view of an apparatus 100 of the invention. Apparatus 100 comprises a monitor or display device with a CRT 102, and with a loudspeaker system that includes loudspeaker devices 104 and 106. Devices 104 and 106 both have the same configuration in this example, and speaker device 106 is discussed in more detail below.

Speaker device 106 comprises an electro-acoustic transducer 108 mounted at one end of a tube 110, and a passive radiator 112 mounted at the other end. Tube 110 has a substantially circular cross-section. Tube 110 is made out of, e.g., aluminum or a synthetic material. Tube 110 can be slightly bent to fit in housing or enclosure 114 of the monitor. Openings (not shown) are provided, e.g., at the top of enclosure 114, to radiate the acoustic energy out of enclosure 114. Tube 110 has sufficiently high resistance to radial oscillations, thus reducing the passing on of sound waves to the interior of CRT 102 either due to the waves propagating through the air or through direct of indirect mechanical contact between tube 110 and CRT 102.

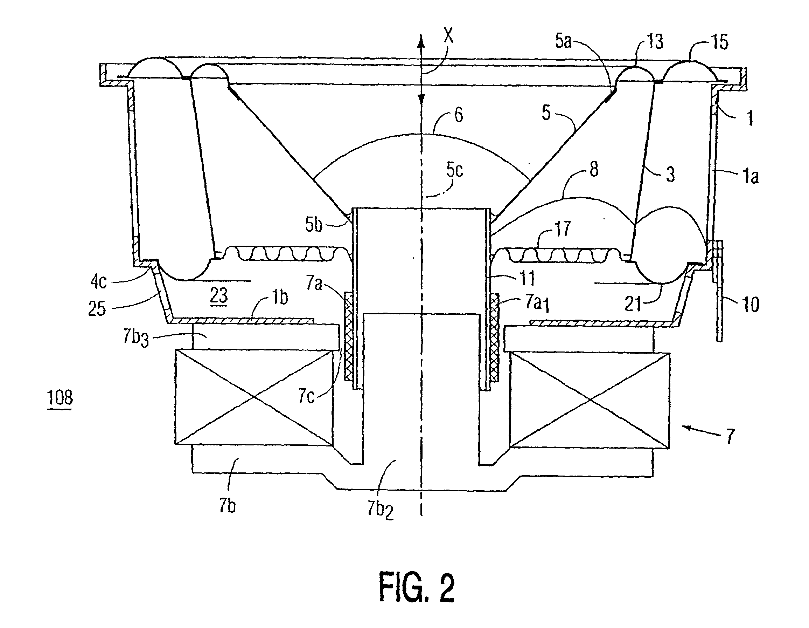

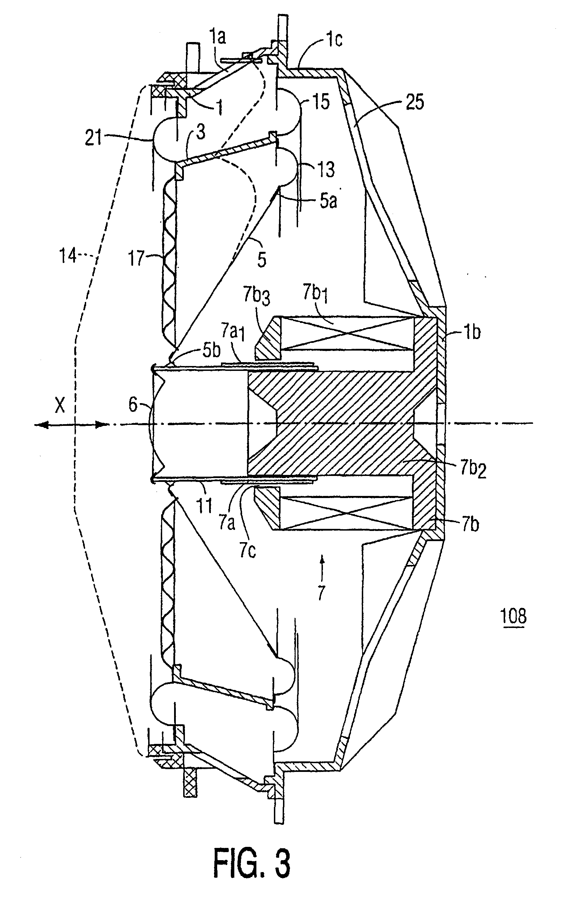

Transducer 108 and radiator 112 are of a conventional type. Alternatively, at least transducer 108 or passive radiator 112 is of the telescopic kind, that enables large displacements of air combined with small size. The cone in a telescoping radiator or transducer is suspended from a sub-frame, and the sub-frame is suspended from a chassis, directly or through one or more other sub-frames. The cones of the transducer and passive radiator are moveable with regard to a respective sub-frame and the sub-frame is moveable with regard to the chassis. Thus, a large displacement volume is combined with a small diameter of the cone, owing to the accumulation of the individual amplitudes of one or more sub-frames and of the cone. This telescoping operation is explained with reference to Figs. 2 and 3. The combination of such a telescoping configuration mounted on a tubular base is highly suitable for being accommodated in a monitor owing to the combination's small size, high performance and mechanical rigidity relating to undesired radiation.

Tube 110 of loudspeaker device 106 has a longitudinal axis 116 that defines a spatial orientation of tube 110. Tube 110 is mounted in such a way that axis 116 is in parallel with a plane of the front panel of CRT 102. That is, axis 116 is in parallel with mask 118 of CRT 102. Loudspeaker device 104 is mounted similarly. By mounting the tubular housing so that its axis lies substantially parallel to mask 118, the mechanical coupling between the loudspeaker and the CRT is minimized. More specifically, the forces arising during operation of the loudspeaker device 106 point along axis 116. In the example of Fig.1, devices 104 and 106 are shown having their tubes mounted in parallel with each other in the vertical direction, and in parallel with mask 118. Both devices 104 and 106 could also be mounted horizontally, and in parallel with each other and in a plane parallel to mask 118. Alternatively, devices 104 and 106 could be arranged so that their axes are both in parallel with mask 118 but make an angle with respect to each other.

It is clear that more than two loudspeaker devices such as 104 and 106 can be mounted inside enclosure 114 provided that there is enough room. Experiments show that a typical order of magnitude for the volume of device 104 or 106 is 1 U.S. quart (1 liter).

### Loudspeaker system

Fig.2 shows an embodiment of transducer 108. Transducer 108 comprises a chassis 1 with sound apertures 1a and a conical diaphragm 5 located within chassis 1. Diaphragm 5 has an open front part 5a and a back part 5b, arranged opposite this front part. Transducer 108 further comprises an electromagnetic actuator 7 having a first actuator part 7a connected to back part 5b, and a second actuator part 7b connected to chassis 1. Actuator parts 7a and 7b cooperate magnetically with one another via an air gap 7c during operation. Transducer 108 further comprises a sub-frame 3 extending between chassis 1 and diaphragm 5, a first flexible connecting element 13 connecting diaphragm 5 to sub-frame 3, and a second flexible connecting element 15 connecting sub-frame 3 to chassis 1 at the location of front part 5a. At the location of back part 5b a flexible centering element 17 connects diaphragm 5 to sub-frame 3, in the present example via a central element 11 secured to diaphragm 5. A flexible connecting element 21 connects sub-frame 3 to chassis 1. Connecting element 21 and connecting elements 13 and 15 each take the form of an omega-shaped rim of a flexible material, particularly polyurethane, connecting element 21 and facing connecting element 15 being arranged in mirror-inverted positions relative to one another. Centering element 17 and connecting elements 13, 15 and 21 form such a suspension for diaphragm 5 that the latter is moveable almost exclusively along its central axis 5c, i.e. in the directions x.

First actuator part 7a of actuator 7 comprises a coil 7a1 secured to element 11 and connected to terminals 10 via an electrical conductor 8. Second actuator part 7b comprises a permanent magnet 7b1 and soft-magnetic yoke parts 7b2 and 7b3. Second actuator part 7b is secured to a base 1b of chassis 1. If desired, first actuator part 7a may comprise a magnet instead of a coil, and second actuator part 7b may comprise a coil instead of a magnet. The magnet of actuator 7 may optionally be replaced by a coil. A space 23 provided between centering element 17 and connecting element 21 on the one hand, and actuator 7 on the other hand, communicates with the surrounding space via one or more sound apertures 25 in a chassis part 1c. As a result of this configuration, diaphragm 5 performs well-defined axial movements relative to sub-frame 3, and sub-frame 3 performs well defined axial excursions relative to chassis 1, thus giving rise to the telescoping operation.

Fig. 3 shows another embodiment of transducer 108. Transducer 108 comprises a chassis 1 having a chassis part 1b forming the base and a chassis part 1c forming a circumferential wall. Chassis 1 has sound apertures 1a and 25. Transducer 108 further comprises a diaphragm 5 having a first part 5a forming the front part and a second part 5b forming the back part. Diaphragm 5 is tapered from first part 5a to second part 5b. Front part 5a is open and has been provided with a central sleeve-shaped or cylindrical part 11. Transducer 108 further comprises a sub-frame 3 extending between diaphragm 5 and chassis 1. Near its front part 5a diaphragm 5 is suspended from sub-frame 3 by a first flexible connecting element 13. At the location of front part 5a, sub-frame 3 is suspended from chassis 1 by means of a second flexible connecting element 15. Furthermore, at the location of back part 5b of diaphragm 5 sub-frame 3 is secured to chassis 1 via a flexible suspension member 21. A flexible centering element 17 extends between sub-frame 3 and back part 5b. The combination of sub-frame 3, elements 13, 15 and 17 and member 21 allow a large excursion of diaphragm 5 relative to chassis 1 in the directions x. An electromagnetic actuator 7 has been provided to drive diaphragm 5. Actuator 7 has a first actuator part 7a connected to diaphragm 5 via a connection to the central element 11 of back part 5b. Actuator 7 has a second actuator part 7b connected to chassis 1 via a connection to base 1b of chassis 1. First actuator part 7a comprises a coil 7a1, which extends in an air gap 7c of a magnetic yoke of second actuator part 7b. The yoke comprises soft-magnetic parts 7b2 and 7b3. Second actuator part 7b further comprises a ring-shaped permanent magnet 7b1. Back part 5b of diaphragm 5 is provided with a dust cap 6 which seals against dust. In the present example, transducer 108 further comprises a protective grill 14.

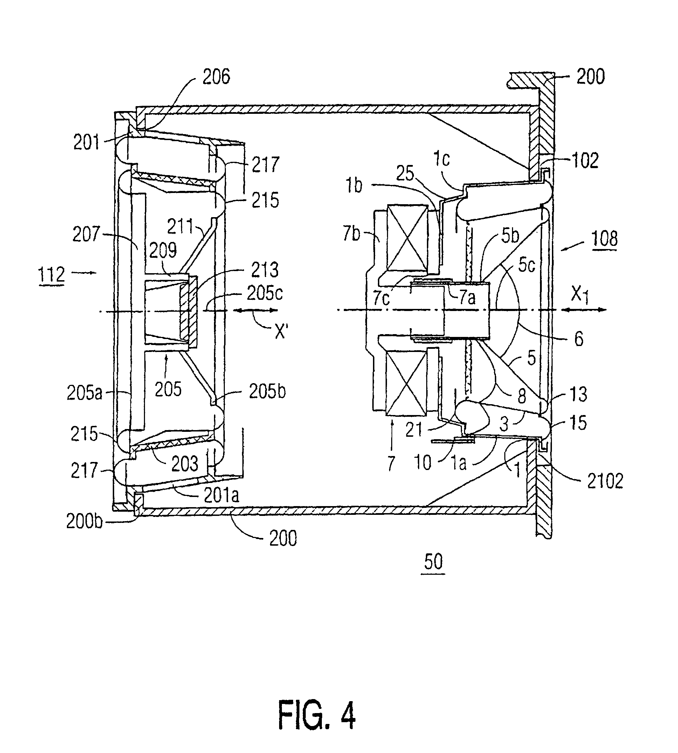

Fig.4 shows a combination 50 of a transducer 108 and passive radiator 112. Combination 50 comprises a housing or enclosure 200, which accommodates transducer 108, in the present example the embodiment of Fig.2. Housing 200 has an opening 202 through which chassis 1 of transducer 108 extends. Chassis 1 is secured to an edge portion 210a of housing 200 around opening 202. For a further description of transducer see the description of Fig. 2.

Combination 50 is constructed, by way of example, as a bass-reflex loudspeaker system and comprises passive radiator 112. For this purpose, housing 200 has a further opening 206, through which a chassis 201 of passive radiator 112 extends. Chassis 201 is secured to an edge portion 200b of the housing 200 around opening 206. Passive radiator 112 further comprises a sub-frame 203 and a mass element 205. Chassis 201 may have apertures 201a. Sub-frame 203 in the present example is formed by an imperforate solid of revolution. Mass element 205 comprises, e.g., a plate-shaped or disc-shaped part 207, a cylindrical central part 209 and a conical part 211. Central part 209 carries a tuning mass 213 by means of which the desired Helmholtz resonance of the system is tuned. Mass element 205 has a front part 205a and a back part 205b. Passive radiator 112 further comprises first flexible connecting elements 215, which connect mass element 205 flexibly to sub-frame 203, and second connecting elements 217, which connect sub-frame 203 flexibly to chassis 201. First connecting elements 215 connect both front part 205a and back part 205b of mass element 205 to sub-frame 203. Second connecting elements 217 connect sub-frame 203 to chassis 201 both at the location of front part 205a and at the location of the back part 205b. In this example connecting elements 215 and 217 take the form of ring-shaped rims of omega-shaped cross-section. First connecting elements 215 as well as second connecting elements 217 are disposed in mirror-inverted positions relative to one another. The rims are made of polyurethane or of another suitable material, such as rubber. Under the influence of pressure variations produced by transducer 108, mass element 205 performs axial movements x' along its central axis 205c, the amplitude being the sum of the maximum excursion of mass element 205 relative to the sub-frame 203 and the maximum excursion of sub-frame 203 relative to chassis 201. Instead of passive radiator 112 shown, another, non-telescoping, type of passive radiator can be used.

Note that central axis 205c of passive radiator 112 and axis 5c of transducer 108 are in a direct line with each other. Axes 205c and 5c define axis 116 shown in Fig.1. Thus, the forces that arise from the operation of loudspeaker device 106 are made to point along axis 116.

Elements 205, 107, 209 and 213 could have other shapes different from those specified above and from those shown in the drawing, dependent on ease of manufacturing said elements and ease of assembling the radiator.

### Passive radiator

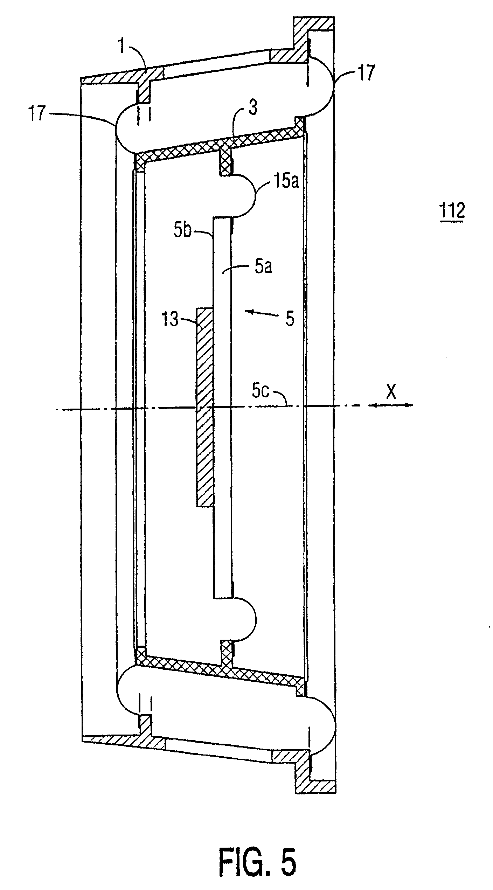

Fig.5 is a diagram of a further embodiment of a telescoping passive radiator 112. Radiator 112 comprises a chassis 1, a mass element 5 and a sub-frame 3, which extends between chassis 1 and mass element 5. Mass element 5 has a front part 5a and a back part 5b. Mass element 5, which is flat in the present example, is connected to sub-frame 3 by means of a first flexible connecting member 15a. Sub-frame 3 is connected to chassis 1 by means of a second flexible connecting member comprised of two flexible connecting elements 17. Both connecting members are flexible and compliant in directions parallel to central axis 5c of the mass element. As a result, axial movements of mass element 5 are determined by axial movements of mass element 5 relative to sub-frame 3 and of sub-frame 3 relative to chassis 1. Connecting member 15a and connecting elements 17 in the present example are formed by ring-shaped bodies of omega-shaped cross-section, which present a comparatively high resistance to lateral deformations, i.e. deformations in radial directions with respect to the central axis. One of the parts of mass element 5, in the present example back part 5b, carries a tuning mass.

## Claims

1. An apparatus with a combination of a monitor having a front panel, and a loudspeaker system, wherein the loudspeaker system comprises a tubular housing having a longitudinal axis, and an electro-acoustic transducer, wherein the transducer is located substantially at an end of the tubular housing, which the tubular housing is mounted so that its longitudinal axis is substantially in parallel with a plane of the front panel, and wherein the transducer comprises
- a chassis physically integrated with the tube;
- a diaphragm having a front part and a back part and located within the chassis;
- an electromagnetic actuator comprising a first actuator part connected to the back part of the diaphragm and a second actuator part connected to the chassis to cooperate with the first actuator part via an air gap;
- a telescoping arrangement coupled between the chassis and the diaphragm and determining an amplitude of the movement of the diaphragm by telescoping movement of the arrangement;
- suspension means for flexibly suspending the diaphragm from the chassis via the telescoping arrangement.

2. The apparatus of claim 1, wherein the tubular housing has a substantially circular cross-section.

3. The apparatus of claim 1, comprising a passive radiator located substantially at the other end of the tubular housing.

4. The apparatus of claim 3, wherein the passive radiator comprises:
- a further chassis physically integrated with the tube;
- a mass element having a front part and a back part and located within the further chassis;
- a further telescoping arrangement coupled between the further chassis and the mass element and determining a further amplitude of the movement of the mass element by enabling telescoping movement;
- further suspension means for flexibly suspending the mass element from the further chassis via the further telescoping arrangement.

## Patentansprüche

1. Gerät mit einer Kombination eines Monitors mit einer Frontplatte, und eines Lautsprechersystems, wobei das Lautsprechersystem ein rohrförmiges Gehäuse mit einer Längsachse, und einen elektroakustischen Wandler aufweist, wobei der Wandler im Wesentlichen an einem Ende des rohrförmigen Gehäuses vorgesehen ist, wobei das rohrförmige Gehäuse derart angeordnet ist, dass die Längsachse sich im Wesentlichen parallel zu der Ebene der Frontplatte erstreckt und wobei der Wandler Folgendes enthält:
- ein Chassis, das physikalisch mit dem Rohr integriert ist,
- eine Membrane mit einem Vorderteil und einem Hinterteil, die innerhalb des Chassis vorgesehen ist,
- einen elektromagnetischen Aktuator mit einem ersten Aktuatorteil, der mit dem Hinterteil der Membrane verbunden ist, und mit einem zweiten Aktuatorteil, der mit dem Chassis verbunden ist zum Zusammenarbeiten mit dem ersten Aktuatorteil über einen Luftspalt,
- eine teleskopische Vorrichtung, die zwischen dem Chassis und der Membrane gekuppelt ist und eine Amplitude der Bewegung der Membrane durch eine teleskopische Bewegung der Vorrichtung bestimmt,
- Aufhängemittel zur flexiblen Aufhängung der Membrane an das Chassis, und zwar mit Hilfe der teleskopischen Vorrichtung.

2. Gerät nach Anspruch 1, wobei das rohrförmige Gehäuse im Wesentlichen einen kreisförmigen Querschnitt hat.

3. Gerät nach Anspruch 1 mit einem passiven Strahler, der im Wesentlichen am anderen Ende des rohrförmigen Gehäuses angeordnet ist.

4. Gerät nach Anspruch 3, wobei der passive Strahler die nachfolgenden Elemente umfasst:
- ein weiteres Chassis, das physikalisch mit dem Rohr integriert ist,
- ein Massenelement mit einem Frontteil und einem Hinterteil, das innerhalb des weiteren Chassis vorgesehen ist,
- eine weitere teleskopische Vorrichtung, die zwischen dem weiteren Chassis und dem Massenelement vorgesehen ist und eine weitere Amplitude der Bewegung des Massenelementes bestimmt, indem die teleskopische Bewegung ermöglicht wird,
- weitere Aufhängemittel zur flexiblen Aufhängung des Massenelementes an das weitere Chassis, und zwar mit Hilfe der weiteren teleskopischen Vorrichtung.

## Revendications

1. Appareil pourvu d'une combinaison d'un moniteur comportant un panneau avant et d'un système de haut-parleur, dans lequel le système de haut-parleur comprend un logement tubulaire présentant un axe longitudinal, et un transducteur électroacoustique, dans lequel le transducteur se trouve pratiquement à une extrémité du boîtier tubulaire, lequel boîtier tubulaire est monté de telle sorte que son axe longitudinal est pratiquement parallèle à un plan du panneau avant, et dans lequel le transducteur comprend :
- un châssis physiquement intégré dans le tube ;
- une membrane comportant une partie avant et une partie arrière et située dans le châssis ;
- un actionneur électromagnétique comprenant une première partie d'actionneur reliée à la partie arrière de la membrane et une deuxième partie d'actionneur reliée au châssis pour coopérer avec la première partie d'actionneur par le biais d'un intervalle d'air ;
- un montage télescopique couplé entre le châssis et la membrane et déterminant une amplitude du mouvement de la membrane par mouvement télescopique du montage, et
- un moyen de suspension pour suspendre de manière flexible la membrane au châssis par le biais du montage télescopique.

2. Appareil suivant la revendication 1, dans lequel le boîtier tubulaire comprend une section pratiquement circulaire.

3. Appareil suivant la revendication 1, comprenant un radiateur passif situé pratiquement à l'autre extrémité du boîtier tubulaire.

4. Appareil suivant la revendication 3, dans lequel le radiateur passif comprend :
- un autre châssis physiquement intégré dans le tube ;
- un élément de masse comportant une partie avant et une partie arrière et situé dans l'autre châssis ;
- un autre montage télescopique couplé entre l'autre châssis et l'élément de masse et déterminant une autre amplitude du mouvement de l'élément de masse en permettant un mouvement télescopique, et
- un autre moyen de suspension pour suspendre de manière flexible l'élément de masse à l'autre châssis par le biais de l'autre montage télescopique.
